# EUROPÄISCHE PATENTSCHRIFT

(11) **EP 4 155 710 B1**
(45) Veröffentlichungstag und Bekanntmachung des Hinweises auf die Patenterteilung: **30.08.2023**
(21) Anmeldenummer: 22187054.6
(22) Anmeldetag: 26.07.2022
(51) Int. Cl.: G01N 1/22

(54) **MESSSYSTEM UND VERFAHREN ZUR MESSUNG VON GASFÖRMIGEN RAUCHGASBESTANDTEILEN**
MEASURING SYSTEM AND METHOD FOR MEASURING GASEOUS FLUE GAS COMPONENTS
SYSTÈME DE MESURE ET PROCÉDÉ DE MESURE DE COMPOSANTS GAZEUX DU GAZ DE FUMÉE

(30) Priorität: 23.09.2021 DE 102021124693
(43) Veröffentlichungstag der Anmeldung: 29.03.2023
(73) Patentinhaber: SICK AG, 79183 Waldkirch (DE)
(72) Erfinder: Andräß, Siegfried, Blumberg (DE); Sobotta, Bernd, Much (DE); Martin, Kaltenbach, Much (DE)

(56) Entgegenhaltungen:
- EP-A2- 1 008 842
- DE-A1-102009 010 896
- US-A- 3 085 435

## Beschreibung

Die Erfindung betrifft ein Messsystem und ein Verfahren für die Messung von gasförmigen Rauchgasbestandteilen in einer heißen, staubhaltigen Gasatmosphäre.

Die Betreiber von Feuerungsanlagen von Kraftwerken, Müllverbrennungsanlagen, Glasschmelzen oder Zementdrehöfen und anderen sind nicht zuletzt aus Umweltgründen gehalten, eine einwandfreie Verbrennung möglichst mit Hilfe einer Regelung der Feuerung zu gewährleisten. Um die vorgeschriebenen Umweltdaten einhalten zu können, ist ständig unter anderem die Sauerstoffkonzentration im Rauchgas zu überwachen. Es ist deshalb eine kontinuierliche Rauchgasanalyse (Prozessgasanalyse), zum Beispiel für die Zementindustrie im Bereich der Ofeneinlaufkammer ein etablierter Stand der Technik.

Besonders schwierig hierbei sind die Rahmenbedingungen der Prozessgasentnahme. Aufgrund der hohen Staubbeladung sowie der Stoffeigenschaften sind regelmäßige Reinigungen von Filtertechnik und Entnahmeleitung notwendig. Grundsätzlich ist bei allen Systemen während der Rückreinigung vom Filter oder auch der Entnahmeleitung keine Probenentnahme zur Analyse hin möglich. Das System ist schlicht nicht verfügbar.

Eine In-Situ-Meßanordnung zur Bestimmung der gasförmigen Rauchgasbestandteilen ist beispielsweise aus der EP 1371976 A1 bekannt, bei der mittels einer wassergekühlten Gasentnahmesonde In-Situ-Messungen möglich sind.

Dennoch herrscht, wie beschrieben, in den genannten Feuerungsanlagen, zum Beispiel Zementdrehöfen, eine sehr hohe Staubbeladung vor, so dass an den bisher bekannten Sonden die Gefahr des Anbackens von Staub im Innern des Sondenkörpers besteht. Um diese Sonden wieder von Anbackungen freizubekommen, sind erhebliche Demontage- und Montagearbeiten sowie Wartungsarbeiten nötig oder, wie in EP 1371976 A1, aufwändige Mechaniken an den Gasentnahmerohren vorgesehen, um an den diversen Rohren durch Bewegungen etwaige Anbackungen abzustreifen oder abzuschütteln. Diese Arbeiten haben einen längeren Ausfall der Messung zur Folge.

Deshalb ist aus der EP 3608667 A1 eine Messgassonde bekannt, die zwei Sondenkörper aufweist, die jeweils mittels einer Mechanik entlang einer Führung zurückziehbar sind, so dass jede der beiden Sondenkörper in eine Messposition ausfahrbar und aus dieser Messposition in eine Spülposition zurückziehbar ist. Auf diese Weise kann zwar im Prinzip kontinuierlich gemessen werden, denn wenn einer der Sondenkörper zum Spülen zurückgezogen ist, kann der andere Sondenkörper noch Messgas entnehmen und umgekehrt. Diese Vorrichtung hat aber den großen Nachteil, dass eine Mechanik zum Zurückziehen der Sondenkörper sehr aufwändig ist und auch das Zurückziehen und wieder Ausfahren einen hohen Regelungsaufwand erfordert.

Weitere Probenentnahmesonden sind aus US 3 085 435 A, EP 1 008 842 A2, DE 15 33 829 B, DE 23 43 470 A und WO 2019 / 174 812 A1 bekannt.

Ausgehend von diesem Stand der Technik ist es Aufgabe der Erfindung, eine in einer heißen, staubbeladenen Gasatmosphäre einzusetzende Messgassonde und ein Messsystem zu schaffen, das weitgehend wartungsfrei kontinuierlich arbeiten kann und dabei aber einfach aufgebaut sein soll.

Die Aufgabe wird gelöst durch ein Messsystem mit den Merkmalen des Anspruchs 1. Vorteilhafte Ausgestaltungen der Erfindung sind Gegenstand der abhängigen Ansprüche.

In einer solchen Ausgestaltung ermöglicht die Messgassonde einen kontinuierlichen Betrieb eines mit dieser Messgassonde ausgerüsteten Messsystems, denn während die Gasprobe durch eines der beiden Probeentnahmerohre entnommen wird, kann das andere Probeentnahmerohr gereinigt werden. Damit kann das Messsystem in sehr staubhaltigen Gasatmosphären, beispielsweise bei der Zementherstellung, eingesetzt werden. Durch die ebenfalls vorgesehene Kühlung der beiden Probeentnahmerohre ist der Einsatz in heißen Umgebungen problemlos. Trotz der erfindungsgemäßen Ausgestaltungen ist die Messgassonde einfach aufgebaut und entsprechend kostengünstig herstellbar.

In Weiterbildung der Erfindung erstreckt sich der Kühlmittelvorlauf über ein Kühlmittelvorlaufrohr bis in den Bodenbereich, und das Kühlmittel tritt erst dort aus. Dadurch durchströmt das Kühlmittel vom Boden her den Sondenkörper in Richtung Deckel und hat dadurch eine günstige Kühlwirkung. Denn das zugeführte, noch kalte Kühlmittel wird durch den Kühlmittelvorlauf bis an die heißeste Stelle der Messgassonde, nämlich an deren Spitze, geführt.

Damit die beiden Probenentnahmeöffnungen einen Abstand zueinander aufweisen und eine Probenentnahme durch eine der beiden Probenentnahmerohre nicht gestört wird von dem Spülvorgang des anderen Probeentnahmerohres, sind die Probeentnahmeöffnungen auf dem Rohraußenwandumfang angeordnet, wobei das zu entnehmende Gas radial abgesaugt wird und Spülluft des einen Probeentnahmerohres nicht in das andere Probeentnahmerohr gelangt.

Um die wechselseitige Nutzung der Probeentnahmerohre zu bewerkstelligen, sind gemäß der Erfindung die beiden Probeentnahmerohre über Gasleitungen mit der Messvorrichtung verbunden und Gasabsperrventile vorgesehen zur wahlweisen Verbindung eines der Probeentnahmerohre mit der Messvorrichtung. Vorteilhafterweise sind die Gasabsperrventile extern steuerbar, so dass eine Umschaltung von einem Probeentnahmerohre auf das andere automatisch gesteuert erfolgen kann.

Um das Messsystem vor Verschmutzungen zu schützen, ist zwischen jeder der Probeentnahmerohre und der Messvorrichtung je ein Partikelfilter vorgesehen.

Im Laufe der Zeit werden diese Partikelfilter sich mit gefilterten Partikeln zusetzen, so dass Filterrückspülvorrichtungen zur Reinigung der Partikelfilter vorgesehen sind.

Zur Reinigung der Probeentnahmerohre sind Rohrrückspülvorrichtungen vorgesehen, die unter anderem Spülventile aufweisen.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung einer erfindungsgemäßen Messgassonde im Schnitt entlang einer Linie I-I aus der Fig. 2;
- Fig. 2: eine Schnittansicht der Messgassonde entlang der Linie II-II aus der Fig. 1;
- Fig. 3: eine schematische Darstellung des erfindungsgemäßen Messsystems mit Messgassonde und Messvorrichtung, die über Gasleitungen verbunden sind.

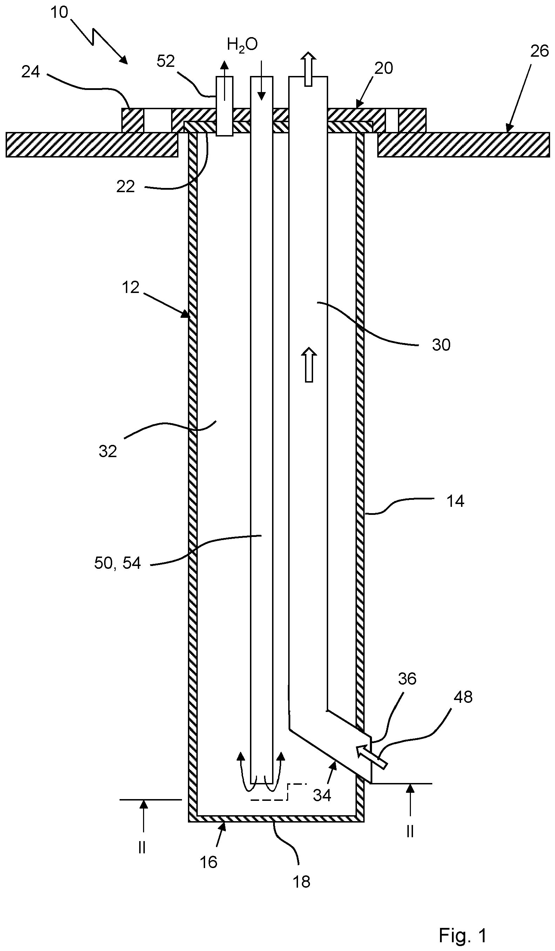

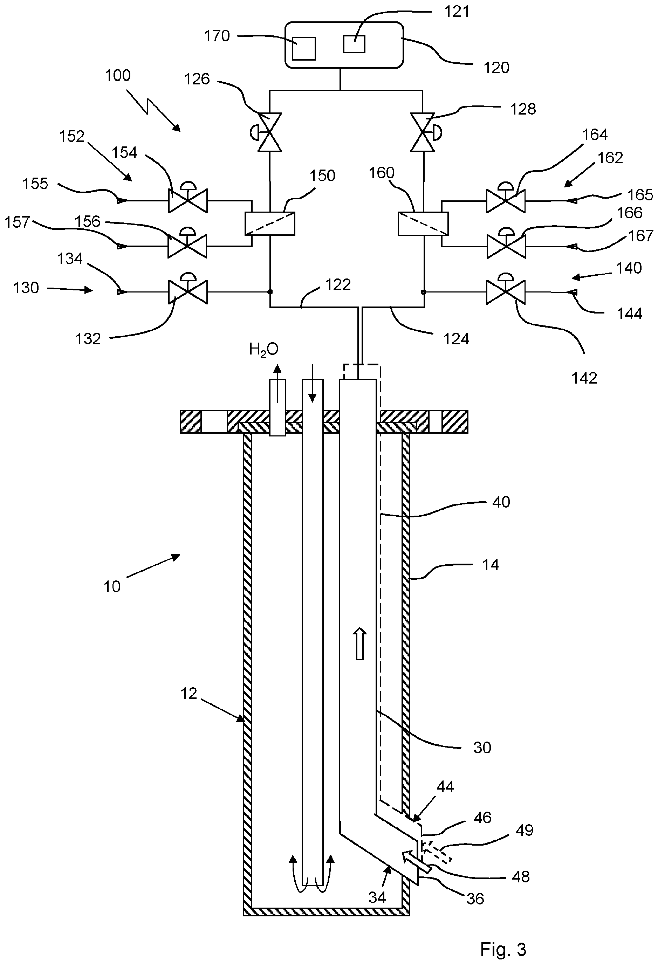

Die erfindungsgemäße Messgassonde 10 (Fig. 1) und das erfindungsgemäße Messsystem 100 (Fig. 3) sind für die Bestimmung von gasförmigen Bestandteilen im Rauchgas, insbesondere des Gehaltes an Sauerstoff, Kohlenmonoxid (CO), Stickoxid (NOx), Chlorwasserstoff (HCl) und weiteren bestimmt und werden an Feuerungen mit einer sehr staubhaltigen und heißen Gasatmosphäre von bis zu 1400° C eingesetzt. Ein bevorzugter Anwendungsfall ist der Einsatz an Zementdrehrohröfen. Die Prozessgase werden analysiert, indem eine Gasprobenentnahmesonde verwendet wird, die typischerweise so positioniert ist, dass Gasproben aus dem Ofeneinlass entnommen werden und die Gaszusammensetzung analysiert wird. Der O2-Gehalt und auch der CO-Gehalt werden analysiert, um die Stöchiometrie im Ofen zu optimieren. Der Sauerstoffgehalt im Ofen wird auch analysiert, um die Explosionsgefahr zu kontrollieren und eine toxische Ansammlung von Kohlenmonoxid zu verhindern. Die Messung des Sauerstoffgehalts ermöglicht auch die Steuerung der Luftzufuhr, um die Verbrennung auf das gewünschte Niveau zu bringen. Durch die Analyse der Prozessgase kann der Verbrennungsprozess mit dem Ziel der Emissionsminimierung gesteuert werden. Darüber hinaus kann die Qualität der gebrannten Produkte auf Basis einer Prozessgasanalyse kontrolliert werden. Schließlich können der Gehalt und die Art der flüchtigen Stoffe identifiziert werden, um das Auftreten von Materialaufbau zu verhindern und um Korrosionsprobleme zu reduzieren.

Das erfindungsgemäße Messsystem 100 umfasst eine erfindungsgemäße Messgassonde 10, die über Gasleitungen mit einer Messvorrichtung 120 verbunden ist. In der Messvorrichtung 120 sind entsprechende Sensoren 121 oder Spektrometer zur Bestimmung der gasförmigen Rauchgasbestandteile enthalten. Die Messvorrichtung 120 ist mit einer nicht dargestellten Steuerung für den gesamten Feuerungsprozess und/oder mit einem Display oder dergleichen verbunden.

Die Messgassonde 10 weist eine an den Messort angepasste Baulänge zwischen typischerweise 2 m bis 4,5 m auf. Sie besteht aus einem rohrförmigen, kühlmittelgekühlten Sondenkörper 12, der eine Rohraußenwand 14, einen eine Stirnseite 16 abschließenden Boden 18 und einen die andere Stirnseite 20 abschließenden Deckel 22 aufweist. Der Deckel 22 ist mit einem Flansch 24 verbunden, mit dem die Messgassonde an einer das zu messende Gas enthaltenden Ofeneinlaufkammer 26 montiert werden kann, die in Fig. 1 nur durch Teilstücke einer Ofenwand dargestellt ist. Deckel 22 und Flansch 24 könnten auch ein integrales Bauteil sein. Alle Bauteile bestehen bevorzugt aus Edelstahl.

Weiter weist die Messgassonde 10 ein erstes Probeentnahmerohr 30 auf, das im Inneren 32 des Sondenkörpers 12 parallel zur Längsachse des Sondenkörpers 12 verläuft und den Deckel 22 durchsetzt. Ein vom Deckel 22 entferntes Ende 34 des Probeentnahmerohrs 30 ist seitlich abgeknickt, so dass das Ende 34 als erste Probeentnahmeöffnung 36 zur Gasentnahme seitlich aus der Rohraußenwand 14 herausgeführt ist.

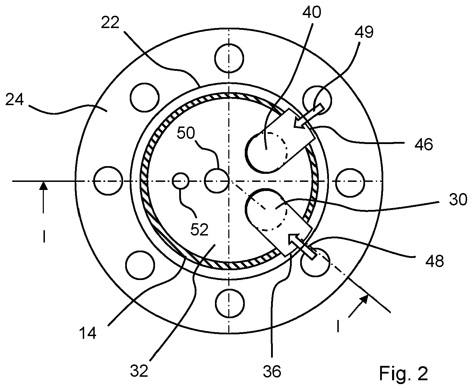

Wie insbesondere in Fig. 2 erkennbar ist und in Fig. 3 mit gestrichelten Linien angedeutet ist, weist die Messgassonde 10 ein zweites Probeentnahmerohr 40 auf, das im Wesentlichen parallel zum ersten Probeentnahmerohr 30 verläuft und baugleich wie das erste Probeentnahmerohr 30 aufgebaut ist und somit eine zweite Probeentnahmeöffnung 46 an seinem Ende 44 aufweist.

Die abgewinkelten Enden 34 und 44 der beiden Probeentnahmerohre 30 und 40 sind in dieser Ausführungsform jeweils radial ausgerichtet (Fig. 2), so dass die Probeentnahmeöffnungen 36 und 46 auf dem Rohraußenwandumfang des Sondenkörpers 12 angeordnet sind, so dass das zu entnehmende Gas im Wesentlichen radial angesaugt wird (Fig. 2). Der Weg des zu entnehmenden Gases ist in der Zeichnung durch Pfeile 48 und 49 angedeutet.

Der Sondenkörper 12 weist weiter eine Kühlung auf. Als Kühlmittel wird typischerweise Wasser mit Additiven benutzt. Dazu führt ein durch den Deckel 22 geführter Kühlmittelvorlauf 50 Wasser ins Innere des Sondenkörpers 12. Über einen Kühlmittelrücklauf 52 wird das Kühlmittel/Wasser wieder herausgeführt. Eine nicht dargestellte Kühlmittelpumpe bewirkt den Kühlmittelumlauf. Der Kühlmittelvorlauf 50 umfasst ein Kühlmittelvorlaufrohr 54, das bis in den Bodenbereich hineinreicht, so dass das Kühlwasser erst im Bodenbereich aus dem Kühlmittelvorlaufrohr 54 austritt und in das Innere 32 des Sondenkörpers 12 strömt. Der Kühlmittelrücklauf 52 ist in dem dargestellten Ausführungsbeispiel gebildet durch eine Öffnung im Deckel 22, durch die das Kühlwasser zurückfließen kann. Insgesamt durchströmt daher das Kühlwasser vom Boden 18 her den Sondenkörper 12 in Richtung Deckel 22. Dabei umspült es die beiden Probeentnahmerohre 30 und 40 und kühlt diese sowie den Sondenkörper 12. Optional könnten zur Steuerung des Kühlmittelflusses und damit besseren Wärmeabführung Leitbleche im Sondenkörper 12 vorgesehen sein. Andere Kühlmittelführungen sind denkbar.

In einer solchen Ausgestaltung ermöglicht die Messgassonde 10 einen kontinuierlichen Betrieb des mit dieser Messgassonde 10 ausgerüsteten Messsystems 100. Dieser Betrieb wird im Folgenden anhand der Fig. 3 erläutert.

Zur Messung wird eine Gasprobe durch eines der beiden Probeentnahmerohre 30 bzw. 40 entnommen. Dies ist durch die Pfeile 48 bzw. 49 angedeutet. Das durch das Probeentnahmerohr 30 entnommene Gas erreicht über eine erste Gasleitung 122 das Messgerät 120. Das durch das Probeentnahmerohr 40 entnommene Gas erreicht über eine zweite Gasleitung 124 das Messgerät 120. In dem Messgerät 120 erfolgt die eigentliche Analyse des Gases, so dass über entsprechende Ausgabesignale des Messgeräts 120 abhängig von den ermittelten Rauchgasbestandteilen eine geeignete Steuerung der Reaktion in der Ofeneinlaufkammer 26 erfolgen kann.

Ein wesentliches Element der Erfindung ist, dass während einer Probeentnahme durch eines der beiden Probeentnahmerohre 30 oder 40, das andere Probeentnahmerohr 40 bzw. 30 gereinigt werden kann. Dazu ist in der ersten Gasleitung 122 ein erstes Gasabsperrventil 126 vorgesehen und in der zweiten Gasleitung 124 ein zweites Gasabsperrventil 128. Die beiden Gasabsperrventile 126 und 128 sind im Messbetrieb wechselseitig geöffnet, so dass die Gasprobenentnahme entweder durch das erste Probeentnahmerohr 30 erfolgt oder durch das zweite Probeentnahmerohr 40. Bevorzugt sind die Gasabsperrventile 126 und 128 extern steuerbar, so dass die Umschaltung von einem Probeentnahmerohr auf das andere automatisch gesteuert erfolgen kann.

Während über das eine Probeentnahmerohr die Entnahme erfolgt, kann das andere gespült und damit gereinigt werden. Dazu ist für jedes Probeentnahmerohr 30 bzw. 40 eine Rohrrückspülvorrichtung 130 bzw. 140 vorgesehen. Mit dieser kann das jeweilige Probeentnahmerohr 30 bzw. 40 gespült werden. Dazu ist ein mittels eines Rückspülventils 132 bzw. 142 öffenbarer Spülanschluss 134 bzw. 144 vorgesehen, über den Spülluft durch das Probeentnahmerohr 30 bzw. 40 entgegen der Entnahmerichtung (Pfeile 48 bzw. 49) zum Reinigen mit Hochdruck durchgeblasen werden kann.

Um die Messvorrichtung 120 mit den darin vorgesehenen Analysekomponenten vor Verschmutzungen zu schützen, ist jeweils zwischen dem Probeentnahmerohr 30 bzw. 40 und der Messvorrichtung 120 ein Partikelfilter 150 bzw. 160 vorgesehen. Im Laufe der Zeit wird der Partikelfilter 150 bzw. 160 sich mit gefilterten Partikeln zusetzen, so dass vorteilhafter Weise je Entnahmezweig eine Filterrückspülvorrichtung 152 bzw. 162 zur Reinigung des Partikelfilters 150 bzw. 160 vorgesehen ist. Die Filterrückspülvorrichtung 152 bzw. 162 umfasst in diesem Ausführungsbeispiel ein Filterrückspülventil 154 bzw. 164, über das Spülluft über einen Druckluftanschluss 155 bzw. 165 zugeführt werden kann, so dass der Partikelfilter 150 bzw. 160 durch Rückspülung gereinigt werden kann. Da häufig auch der Filterraum verunreinigt ist, umfasst die Filterrückspülvorrichtung 152 bzw. 162 in gleicher Weise ein Filterraumrückspülventil 156 bzw. 166, mit dem der Filterraum an einen Druckluftanschluss 157 bzw. 167 angeschlossen und mit Druckluft rückgespült werden kann. Insbesondere die Filterreinigung erfolgt impulsweise, so dass die Spülung stoßweise durch das Filter geleitet wird, damit die Verunreinigungen sich besser lösen und herausgespült werden. Die Spülluft für die Filterrückspülung bzw. Filterraumrückspülung wird über das Probeentnahmerohr 30 bzw. 40 entsorgt.

Bevorzugt umfasst das Messsystem eine Steuereinheit 170, die dazu eingerichtet und konfiguriert ist, die Probeentnahme- und Reinigungszyklen zu steuern. Über diese Steuereinheit werden dann die Gasabsperrventile 126 und 128 sowie die Rohrrückspülvorrichtungen 130 und 140 und die Filterrückspülvorrichtungen 152 und 162 mit ihren jeweiligen Komponenten gesteuert.

Damit die Spülluft, die aus einer der Probeentnahmeöffnungen 36 bzw. 46 austritt, nicht die Probeentnahme an der anderen Probeentnahmeöffnung 46 bzw. 36 stört, also Spülluft mit der Probenentnahme nicht gleich wieder angesaugt wird, sind die Probeentnahmeöffnungen 36 und 46 in einem Abstand zueinander angeordnet, was an einfachsten erreicht wird, wenn die abgewickelten Enden 34 und 44 der beiden Probeentnahmerohre 30 und 40, wie oben beschrieben und in Fig. 2 gezeigt, radial ausgerichtet sind, so dass das zu entnehmende Gas aus einer anderen Richtung angesaugt wird, als die Austrittsrichtung der Spülluft an dem anderen Probeentnahmerohr. Dazu liegen die abgewickelten Enden 34 und 44 in der Ansicht der Fig. 2 in einem Winkel zueinander.

In Weiterbildung der Erfindung kann der Sondenkörper 12 durch eine nicht dargestellte Mechanik mittels eines ebenfalls nicht dargestellten Antriebes vor- und zurück bewegt werden, um Anbackungen am Sondenkörper 12 zu entfernen.

## Patentansprüche

1. Messsystem bestehend aus einer Messvorrichtung (120) zur Messung der Rauchgasbestandteile einer Gasprobe mit einer Steuereinheit (170) und einer Messgassonde (10) zur Entnahme der Gasprobe in einer heißen, staubhaltigen Gasatmosphäre, wobei die Messgassonde umfasst
- einen Flansch (24) zur Anordnung der Messgassonde (10) an einer das zu messende Gas enthaltenden Ofeneinlaufkammer (26),
- einen rohrförmigen, kühlmittelgekühlten Sondenkörper (12), der eine Rohraußenwand (14), einen eine Stirnseite (16) abschließenden Boden (18) und einen die andere Stirnseite (20) abschließenden Deckel (22) aufweist,
- mit Kühlmittelvorlauf (50) und Kühlmittelrücklauf (52), so dass Kühlmittel im Inneren (32) des Sondenkörpers (12) strömen kann,
- ein erstes Probeentnahmerohr (30), das im Inneren (32) des Sondenkörpers (12) parallel zur Längsachse des Sondenkörpers (12) verläuft und den Deckel (22) durchsetzt, wobei ein vom Deckel (22) entferntes Ende (34) des Probeentnahmerohrs (30) seitlich abgeknickt ist, so dass das Ende als erste Probeentnahmeöffnung (36) zur Gasentnahme seitlich aus der Rohraußenwand (14) ausgebildet ist,
- ein zweites Probeentnahmerohr (40), das im Wesentlichen parallel zum ersten Probeentnahmerohr (30) verläuft und baugleich wie das erste Probeentnahmerohr (30) aufgebaut ist und eine zweite Probeentnahmeöffnung (46) aufweist,
- wobei die beiden Probeentnahmerohre (30, 40) vom Kühlmittel gekühlt sind,
- und die Probeentnahmerohre (30, 40) den Deckel (22) durchsetzen zur Verbindung mit der Messvorrichtung (120), wobei die beiden Probeentnahmerohre der Messgassonde über Gasleitungen mit der Messvorrichtung verbunden sind, **dadurch gekennzeichnet, dass** Gasabsperrventile vorgesehen sind zur wahlweisen Verbindung eines der Probeentnahmerohre mit der Messvorrichtung und Rohrrückspülvorrichtungen zur Spülung der Probeentnahmerohre vorgesehen sind
- und dass die Steuereinheit dazu eingerichtet ist die Messgassonde so zu steuern, dass die Gasprobe durch eines der beiden Probeentnahmerohre entnommen wird und während der Probenentnahme das andere Probeentnahmerohr durch die Rohrrückspülvorrichtung gereinigt wird.

2. Messsystem nach Anspruch 1, **dadurch gekennzeichnet, dass** zwischen jeder der Probeentnahmerohre und der Messvorrichtung ein Partikelfilter vorgesehen ist.

3. Messsystem nach Anspruch 2, **dadurch gekennzeichnet, dass** Filterrückspülvorrichtungen für die Partikelfilter vorgesehen sind.

## Claims

1. Measuring system consisting of a measuring device (120) for measuring the flue gas components of a gas sample with a control unit (170) and a measuring gas probe (10) for taking the gas sample in a hot, dust-containing gas atmosphere, wherein the measuring gas probe comprises
- a flange (24) for placing the measuring gas probe (10) on a furnace inlet chamber (26) containing the gas to be measured,
- a tubular, coolant-cooled probe body (12) having a tubular outer wall (14), a bottom (18) closing one end face (16) and a cover (22) closing the other end face (20),
- with coolant supply (50) and coolant return (52) so that coolant can flow in the interior (32) of the probe body (12),
- a first sampling tube (30) which extends in the interior (32) of the probe body (12) parallel to the longitudinal axis of the probe body (12) and passes through the cover (22), wherein an end (34) of the sampling tube (30) remote from the cover (22) is bent laterally so that the end is formed as a first sampling opening (36) for gas extraction laterally from the tube outer wall (14),
- a second sampling tube (40) extending substantially parallel to the first sampling tube (30) and of identical construction to the first sampling tube (30) and having a second sampling opening (46),
- whereby the two sampling tubes (30, 40) are cooled by the coolant,
- and the sampling tubes (30, 40) pass through the cover (22) for connection to the measuring device (120), wherein the two sampling tubes of the measuring gas probe are connected to the measuring device via gas lines,
**characterised in that**
- that gas shut-off valves are provided for the selective connection of one of the sampling tubes to the measuring device and tube back-flushing devices are provided for flushing the sampling tubes,
- and **in that** the control unit is arranged to control the measuring gas probe in such a way that the gas sample is taken through one of the two sampling tubes and during sampling, the other sampling tube is cleaned by the tube back-flushing device.

2. Measuring system according to claim 1, **characterised in that** a particle filter is provided between each of the sampling tubes and the measuring device.

3. Measuring system according to claim 2, **characterised in that** filter back-flushing devices are provided for the particle filters.

## Revendications

1. Système de mesure composé d'un dispositif de mesure (120) pour mesurer les composants des gaz de combustion d'un échantillon de gaz avec une unité de commande (170) et une sonde de mesure de gaz (10) pour prélever l'échantillon de gaz dans une atmosphère gazeuse chaude et contenant des poussières, dans lequel la sonde de mesure de gaz comprend
- une bride (24) pour placer la sonde de gaz de mesure (10) sur une chambre d'entrée du four (26) contenant le gaz à mesurer,
- un corps de sonde tubulaire refroidi par un liquide de refroidissement (12) ayant une paroi extérieure tubulaire (14), un fond (18) fermant une face d'extrémité (16) et un couvercle (22) fermant l'autre face d'extrémité (20),
- avec une alimentation en liquide de refroidissement (50) et un retour de liquide de refroidissement (52) de manière à ce que le liquide de refroidissement puisse circuler à l'intérieur (32) du corps de la sonde (12),
- un premier tube de prélèvement (30) qui s'étend à l'intérieur (32) du corps de la sonde (12) parallèlement à l'axe longitudinal du corps de la sonde (12) et traverse le couvercle (22), dans lequel une extrémité (34) du tube de prélèvement (30) éloignée du couvercle (22) est pliée latéralement de sorte que l'extrémité est formée comme une première ouverture de prélèvement (36) pour l'extraction de gaz latéralement à partir de la paroi extérieure du tube (14),
- un second tube de prélèvement (40) s'étendant sensiblement parallèlement au premier tube de prélèvement (30), de construction identique au premier tube de prélèvement (30) et comprenant une seconde ouverture de prélèvement (46),
- les deux tubes de prélèvement (30, 40) étant refroidis par le liquide de refroidissement,
- et les tubes de prélèvement (30, 40) traversent le couvercle (22) pour être reliés au dispositif de mesure (120), les deux tubes de prélèvement de la sonde de gaz de mesure étant reliés au dispositif de mesure par des conduites de gaz, **caractérisé en ce que**
- des vannes d'arrêt de gaz sont prévues pour le raccordement sélectif d'un des tubes de prélèvement à l'appareil de mesure et des dispositifs de rétro-rinçage des tubes sont prévus pour rincer les tubes de prélèvement,
- et **en ce que** l'unité de commande est conçue pour commander la sonde de gaz de mesure de manière à ce que l'échantillon de gaz soit prélevé par l'un des deux tubes d'échantillonnage et, pendant l'échantillonnage, l'autre tube d'échantillonnage soit nettoyé par le dispositif de rinçage à contre-courant du tube.

2. Système de mesure selon la revendication 1, **caractérisé en ce qu'**un filtre à particules est prévu entre chacun des tubes de prélèvement et le dispositif de mesure.

3. Système de mesure selon la revendication 2, **caractérisé en ce que** les filtres à particules sont équipés de dispositifs de rétro-rinçage.
